# EUROPÄISCHE PATENTANMELDUNG

(11) **EP 1 255 370 A2**
(43) Veröffentlichungstag der Anmeldung: **06.11.2002**
(21) Anmeldenummer: 02009091.6
(22) Anmeldetag: 24.04.2002
(51) Int. Cl.: H04L 5/06

(54) **System und Verfahren für den Betrieb von nachrichtentechnischen Geräten niedriger und hoher Datenrate**

(30) Priorität: 03.05.2001 DE 10121527
(71) Anmelder: Grundig AG, 90471 Nürnberg (DE)
(72) Erfinder: Bauerschmidt, Werner, 90579 Langenzenn (DE)

(57) **Zusammenfassung**

Die vorliegende Erfindung betrifft ein System und ein Verfahren für die Betrieb von nachrichtentechnischen Geräten niedriger und hoher Datenrate in drahtlosen Breitbandnetzen.

Es wird vorgeschlagen, nachrichtentechnische Geräte niedriger Datenrate in drahtlose Breitbandnetzen, welche von Geräten hoher Datenrate gebildet werden, zu betreiben, wobei die Geräte hoher Datenrate eine Vielzahl von Trägerfrequenzen für die Übertragung der Daten verwenden, und die Geräte niedriger Datenrate eine einzige Trägerfrequenz für die Übertragung der Daten niedriger Datenrate verwenden, wobei die Geräte niedriger Datenrate nur Signale dieser einen Trägerfrequenz empfangen, und die Geräte hoher Datenrate Daten mit niedriger Datenrate und mit hoher Datenrate senden und empfangen.

## Beschreibung

Die vorliegende Erfindung betrifft ein System und ein Verfahren für den Betrieb von nachrichtentechnischen Geräten niedriger und hoher Datenrate in drahtlosen Breitbandnetzen.

Es sind Verfahren und Systeme für die Übertragung von Daten mittels drahtloser Breitbandnetze bekannt geworden, bei denen Daten mit hoher Datenrate in Netzwerken übertragen werden können, wozu die Daten auf eine Vielzahl von Trägerfrequenzen verteilt werden. Die bekanntesten derartigen Systeme tragen die Bezeichnungen Hiperlan/2 und IEEE802.11, wobei das erst genannte System hauptsächlich in Europa verbreitet ist und das zweit genannte System hauptsächlich in den USA. Die Systeme können Datenraten bis 50 Mbps übertragen, wodurch die Systeme auch für die drahtlose Übertragung von Audiound/oder Videodatenströmen geeignet sind. Der Einsatz der bekannten Systeme und Verfahren für die drahtlose Übertragung ist deshalb besonders im Bereich der Unterhaltungselektronik von Interesse.

Insbesondere im Bereich der Unterhaltungselektronik weisen die bekannten Systeme und Verfahren für die drahtlose Übertragung aber Nachteile auf, da alle in die Netzwerke der Systeme einzubindenden Geräte gewissen Mindestanforderungen genügen müssen. Insbesondere müssen alle Geräte die im jeweiligen System verwendete Datenrate unterstützen, d. h. der gesamte Aufwand des jeweiligen Systems muß in jedem Gerät implementiert werden. Im Bereich der Unterhaltungselektronik kommen aber auch Geräte, wie Gerätesteuerungen und Fernbedienungen, zum Einsatz, die im Vergleich zu den Nutzdaten der anderen Geräte im System, die Audio- und/oder Videosignaldaten übertragen und empfangen, eine wesentlich geringere Datenrate aufweisen. Für derartige Geräte bedeutet die Einbindung in ein Netzwerk der bekannten Systeme für die drahtlose Übertragung einerseits einen hohen Realisierungsaufwand und die damit verbundenen hohen Kosten. Andererseits erfordert die breitbandige drahtlose Übertragung eine große Sendeleistung, woraus ein hoher Energieverbrauch resultiert, der insbesondere bei batteriebetriebenen Geräten wie Fernbedienungen problematisch ist.

Zur Lösung dieser Probleme würde es sich anbieten, ein zweites Übertragungssystem mit niedriger Datenrate einzusetzen. Dies würde zu der gewünschten Vereinfachung bei den Geräten mit niedriger Datenrate sowie zur Senkung des Energieverbrauchs der Geräte mit niedriger Datenrate führen. Durch das zu realisierende zweite Übertragungssystem würde jedoch zusätzlicher Aufwand in den Geräten entstehen, die zusätzlich eine Datenübertragung mit hoher Datenrate benötigen.

Es ist daher Aufgabe der vorliegenden Erfindung, ein System und ein Verfahren für den Betrieb von nachrichtentechnischen Geräten niedriger und hoher Datenrate in drahtlosen Breitbandnetzen anzugeben, die mit geringem Aufwand zu realisieren sind und bei denen die Gräte mit niedriger Datenrate einen geringen Energieverbrauch aufweisen

Bei der vorliegenden Erfindung wird diese Aufgabe durch die Merkmale der nebengeordneten Ansprüche gelöst.

Bei dem erfindungsgemäßen Verfahren für den Betrieb von nachrichtentechnischen Geräten niedriger Datenrate in drahtlosen Breitbandnetzen, welche von Geräten hoher Datenrate gebildet werden, wobei die Geräte hoher Datenrate eine Vielzahl von Trägerfrequenzen für die Übertragung der Daten verwenden, wird dabei von der Überlegung ausgegangen, daß die Geräte niedriger Datenrate eine einzige Trägerfrequenz für die Übertragung der Daten niedriger Datenrate verwenden, die Geräte niedriger Datenrate nur Signale dieser einen Trägerfrequenz empfangen, und die Geräte hoher Datenrate Daten mit niedriger Datenrate und mit hoher Datenrate senden und empfangen.

Bei dem erfindungsgemäßen System bestehend aus mindestens einem nachrichtentechnischen Gerät hoher Datenrate, welche ein drahtloses Breitbandnetz bilden und Daten mittels einer Vielzahl von Trägerfrequenzen übertragen und empfangen, und mindestens einem Gerät niedriger Datenrate wird dabei von der Überlegung ausgegangen, daß das oder die Geräte niedriger Datenrate einen Modulator aufweisen, welcher die Daten niedriger Datenrate einer einzigen Trägerfrequenz aufmoduliert, und daß das oder die Geräte niedriger Datenrate einen Demodulator aufweisen, welcher empfangene Signale mittels der einzigen Trägerfrequenz demoduliert, und daß das oder die Geräte hoher Datenrate eine Hochfrequenzeinrichtung und eine Signalverarbeitungseinrichtung aufweisen, welche Daten mit niedriger Datenrate und mit hoher Datenrate senden und empfangen.

Der Vorteil des Verfahrens und des Systems nach der Erfindung ist darin zu sehen, daß die Einbindung von Geräten niedriger Datenrate in ein drahtloses Breitbandnetz mit geringem Realisierungsaufwand ermöglicht wird. Die in bekannten Breitbandnetzen eingesetzten Geräte hoher Datenrate können dabei nahezu unverändert verwendet werden, da sie die für die Übertragung der Daten niedriger Datenrate verwendete Trägerfrequenz ohne weiteres verarbeiten können. Die Geräte niedriger Datenrate können wegen der Verwendung einer einzigen Trägerfrequenz für das Senden und Empfangen der Daten niedriger Datenrate besonders einfach aufgebaut werden, woraus sich auch ein besonders geringer Energieverbrauch für die Geräte niedriger Datenrate ergibt.

Bei einer vorteilhaften Weiterbildung wird die Trägerfrequenz für die Übertragung der Daten niedriger Datenrate derart gewählt, daß sie von einer Trägerfrequenz der Vielzahl von Trägerfrequenzen gebildet wird, welche für die Übertragung der Daten hoher Datenrate verwendet werden.

Der Vorteil der Weiterbildung ist darin zu sehen, daß sich bei einer geringfügigen Einschränkung der maximal übertragbaren Datenrate der Geräte hoher Datenrate eine besonders einfache Realisierung der Übertragung von Daten niedriger Datenrate für die Geräte mit hoher Datenrate ergibt, da diese ohne zusätzlichen Aufwand erfolgen kann.

Bei einer anderen vorteilhaften Weiterbildung ist es vorgesehen, daß die Trägerfrequenz für die Übertragung der Daten niedriger Datenrate eine zusätzliche Trägerfrequenz ist, welche benachbart zu einer Trägerfrequenz der Vielzahl von Trägerfrequenzen mit einem Frequenzabstand angeordnet ist, welcher dem Frequenzabstand der einzelnen Trägerfrequenzen der Vielzahl von Trägerfrequenzen zueinander entspricht.

Diese Weiterbildung weist den Vorteil auf, daß die Geräte hoher Datenrate Daten mit der maximal möglichen Datenrate übertragen können, wobei ihre Erweiterung um die Übertragungsmöglichkeit für die Daten niedriger Datenrate einfach erfolgen kann, da die zusätzlich benötigte Trägerfrequenz entsprechend der Gesetzmäßigkeiten der Vielzahl von Trägerfrequenzen gebildet ist.

Eine weitere vorteilhafte Weiterbildung sieht vor, mehr als eine Trägerfrequenz für die Übertragung von Daten niedriger Datenrate zu verwenden.

Der Vorteil dieser Weiterbildung ist darin zu sehen, daß die Datenrate für die Übertragung von Daten niedriger Datenrate den jeweiligen Erfordernissen angepaßt werden kann.

Weitere Vorteile der vorliegenden Erfindung ergeben sich aus den abhängigen Ansprüchen sowie der nachfolgenden Beschreibung einer Ausführungsform eines erfindungsgemäßen Systems anhand von Figuren.

### Es zeigt:

- Fig. 1: ein Prinzipschaltbild einer Ausführungsform eines Systems für die Übertragung von Daten mit Geräten hoher und niedriger Datenrate, und
- Fig. 2: ein Diagramm von Trägerfrequenzen, die für die Übertragung von Daten im System nach Fig. 1 verwendet werden.

Zur Erleichterung des Verständnisses der vorliegenden Erfindung sind in den Figuren nur die Bestandteile der Ausführungsform dargestellt, die im Zusammenhang mit der Erfindung von Bedeutung sind.

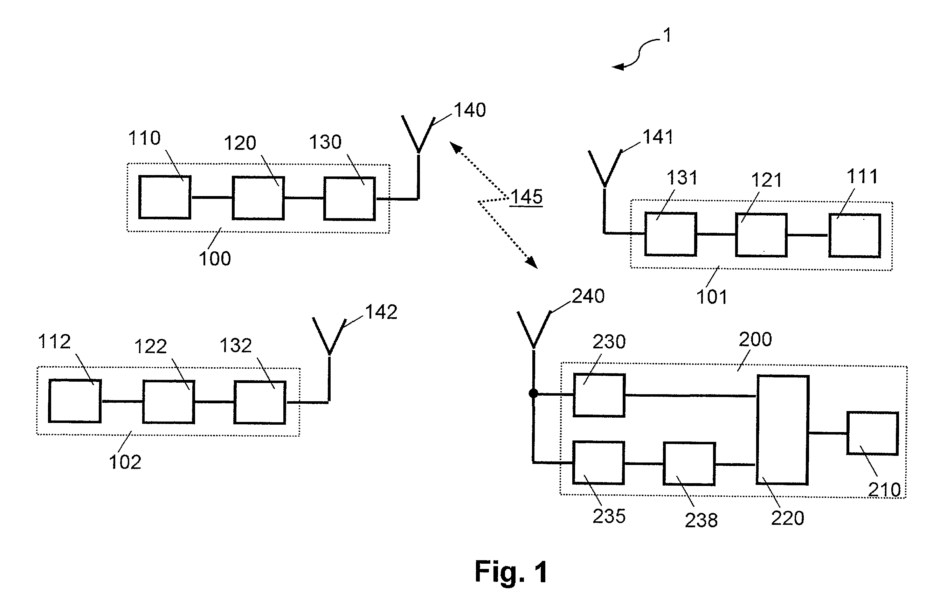

Figur 1 zeigt ein Prinzipschaltbild einer Ausführungsform eines Systems 1 für die Übertragung von Daten mit Geräten hoher Datenrate 100, 101, 102 und einem Gerät niedriger Datenrate 200.

In der dargestellten Ausführungsform sind die Geräte hoher Datenrate 100, 101, 102 beispielsweise Bestandteile einer Stereoanlage, bei der als Nutzdaten Audiosignaldaten zwischen den einzelnen Geräten übertragen werden. Die Geräte hoher Datenrate 100, 101, 102 weisen dazu jeweils eine Antenne 140, 141, 142, eine Hochfrequenzeinrichtung 130, 131, 132, eine Signalverarbeitungseinrichtung 120, 121, 122 sowie eine Einrichtung zur Verarbeitung der Audiosignale 110, 111, 112 auf.

Die Audiosignaldaten werden mittels einer Vielzahl von Trägerfrequenzen übertragen 145. Dazu werden beispielsweise Verfahren eingesetzt, die als Hiperlan/2 oder IEEE802.11 bekannt sind, bei denen das Nutzsignal für die Übertragung einer Vielzahl von Trägerfrequenzen aufmoduliert wird, z. B. mittels des Modulationsverfahrens OFDM (Orthogonal Frequency Division Multiplex). Dazu werden die Audiosignale im Gerät hoher Datenrate 100, beispielsweise die Audiosignale einer Audiosignalquelle 110, z. B. eines CD-Players, von der Signalverarbeitungseinrichtung 120 für die Übertragung aufbereitet, in der Hochfrequenzeinrichtung 130 OFDM-moduliert und mittels der Antenne 140 zu den anderen Geräten hoher Datenrate 101, 102 übertragen 145. Die anderen Geräte hoher Datenrate 101, 102 können beispielsweise von Lautsprechern gebildet werden, welche das von der Signalquelle 110 stammende Audiosignal wiedergeben. Dazu wird das übertragene Signal 145 von den Antennen 141, 142 der Lautsprecher 101, 102 empfangen, von den Hochfrequenzeinrichtungen 131, 132 demoduliert und von den Signalverarbeitungseinrichtungen 121, 122 in Audiosignale gewandelt. Die Audiosignale werden mittels Verstärkern 111, 112 verstärkt und mittels nicht dargestellter elektroakustischer Wandler wiedergegeben.

Ein Gerät niedriger Datenrate 200, z. B. eine Fernbedienung, wird im dargestellten System dazu verwendet, die Geräte hoher Datenrate 100, 101, 102 zu steuern. Die Fernbedienung 200 weist eine Antenne 240, einen Modulator 230, einen Demodulator 235, einen Bandpass 238, eine Signalverarbeitungseinrichtung 220 sowie eine Bedien- und Steuereinrichtung 210 auf.

Mittels der Bedien- und Steuereinrichtung 210 werden die Geräte hoher Datenrate 100, 101, 102 des Systems 1 gesteuert. Beispielsweise kann die Wiedergabelautstärke der Lautsprecher 101, 102 gewählt werden. Dazu wird die gewünschte Wiedergabelautstärke mittels entsprechender Regler der Bedienund Steuereinrichtung 210 eingestellt. Die Signale der Bedien- und Steuereinrichtung 210 werden von der Signalverarbeitungseinrichtung 220 aufbereitet, mittels des Modulators 230 auf eine Trägerfrequenz moduliert und von der Antenne 240 an die Lautsprecher 101, 102 übertragen. Die Steuersignale werden von den Antennen 141, 142 der Lautsprecher 101, 102 empfangen, von den Hochfrequenzeinrichtungen 131, 132 demoduliert und von den Signalverarbeitungseinrichtung 121, 122 verarbeitet, um die Verstärker 111, 112 entsprechend der gewählten Wiedergabelautstärke anzusteuern.

In gleicher Weise kann die Fernbedienung dazu verwendet werden, die Audiosignalquelle 110 des Geräts hoher Datenrate 100 zu steuern, z. B. zur Auswahl bestimmter Audiosignale, wie einzelner Lieder.

Umgekehrt können die Geräte hoher Datenrate 100, 101, 102 Signale niedriger Datenrate an die Fernbedienung 200 oder an jeweils andere Geräte hoher Datenrate 100, 101, 102 senden. Beispielsweise kann das die Signalquelle 110 aufweisende Gerät hoher Datenrate 100 Informationen über die einzelnen Audiosignale, z. B. die Nummer des jeweils wiedergegebenen Lieds oder Informationen über den Interpreten usw., zur Verfügung stellen. Diese Informationen können dann beispielsweise auf einer Anzeige der Bedien- und Steuereinrichtung 210 der Fernbedienung 200 angezeigt werden. Dazu werden die Daten niedriger Datenrate von der Antenne 240 empfangen und vom Demodulator 235 demoduliert. Das demodulierte Signal wird von Bandbaßfilter 238 gefiltert und von der Signalverarbeitungseinrichtung 220 verarbeitet.

Für die Übertragung der Signale niedriger Datenrate ist es dabei vorgesehen, den Trägerfrequenzen eine weitere Trägerfrequenz hinzuzufügen, die ausschließlich der Übertragung der Signale niedriger Datenrate dient, bzw. eine Trägerfrequenz der für die Übertragung der Signale hoher Datenrate verwendeten Trägerfrequenzen ausschließlich für die Übertragung der Signale niedriger Datenrate zu verwenden. Im zuletzt genannten Fall führt dies zwar zu einer Verringerung der maximalen Datenrate bei der Übertragung der Signale hoher Datenrate, die aber akzeptabel ist, solange das Nutzsignal hoher Datenrate mit der verringerten Datenrate übertragen werden kann.

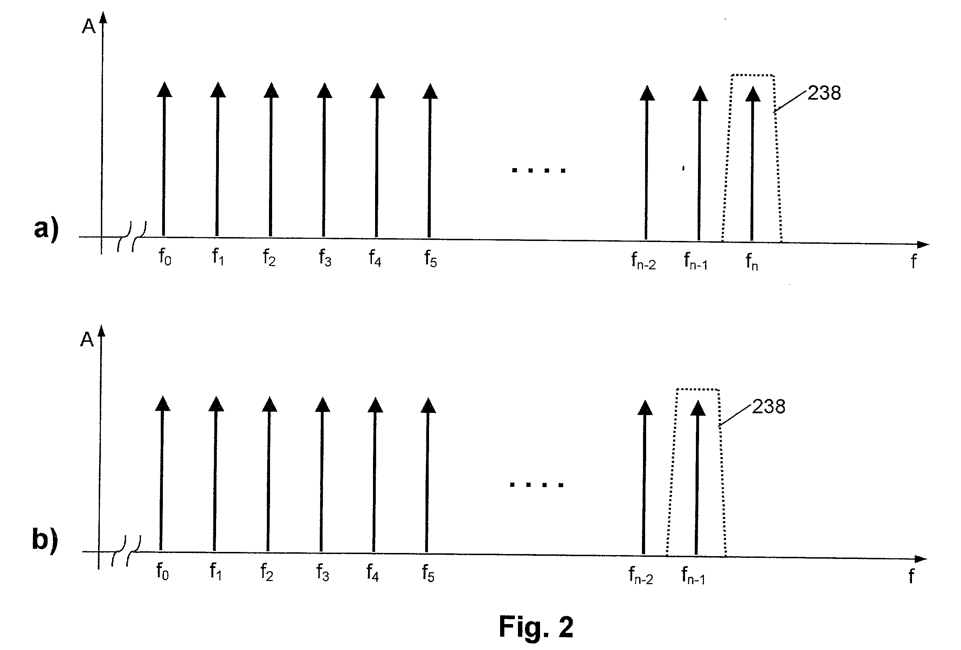

In Figur 2a sind n+1 Trägerfrequenzen f₀ bis fₙ dargestellt. Die n Trägerfrequenzen f₀ bis fₙ₋₁ dienen der Übertragung des Signals hoher Datenrate, wobei die maximale Datenrate des verwendeten Übertragungssystems erreicht werden kann. Die zusätzliche Trägerfrequenz fₙ dient der Übertragung des Signals niedriger Datenrate. Die zusätzliche Trägerfrequenz fₙ grenzt dabei an die n Trägerfrequenzen f₀ bis fₙ₋₁ an und weist den gleichen Frequenzabstand auf, den die n Trägerfrequenzen f₀ bis fₙ₋₁ jeweils zueinander aufweisen. Abweichend von der Darstellung in Figur 2a kann die zusätzliche Trägerfrequenz fₙ auch angrenzend vor der Trägerfrequenz f₀ angeordnet sein.

In Figur 2b sind n Trägerfrequenzen f₀ bis fₙ₋₁ dargestellt. Die n-1 Trägerfrequenzen f₀ bis fₙ₋₂ dienen der Übertragung des Signals hoher Datenrate. Die Trägerfrequenz fₙ₋₁ dient der Übertragung des Signals niedriger Datenrate. Da in diesem Fall die Zahl der für die Übertragung des Signals hoher Datenrate verwendeten Trägerfrequenzen verringert ist, kommt es zur oben beschriebenen Verringerung der maximalen Datenrate für das Signal hoher Datenrate.

Wie oben beschrieben, erfolgt die Signalverarbeitung des Signals niedriger Datenrate im Gerät niedriger Datenrate 200 dadurch, daß das Sendesignal mittels einer Modulatorfrquenz erzeugt wird, welcher der Trägerfrequenz fₙ (Figur 2a) oder fₙ₋₁ (Figur 2b) entspricht. Entsprechend erfolgt die Demodulation des empfangenen Signals mittels einer Demodulatorfrequenz, welche der Trägerfrequenz fₙ oder fₙ₋₁ entspricht. Zusätzlich kann eine Bandpaßfliterung 238 erfolgen. In den Geräten hoher Datenrate 100, 101, 102 erfolgt die Signalverarbeitung im Rahmen der dort ohnehin vorhandenen Verarbeitung der Vielzahl von Trägerfrequenzen. Lediglich für den in Figur 2a dargestellten Fall der Verwendung einer zusätzlichen Trägerfrequenz fₙ ist ein geringfügiger Mehraufwand für die Realisierung der zusätzlichen Trägerfrequenz fₙ nötig. Um Störungen zu vermeiden, wird dem Gerät niedriger Datenrate 200 ein Zeitschlitz vom System 1 zugewiesen, in dem es seine Daten senden kann. Die Zuweisung kann beispielsweise von einem der Geräte hoher Datenrate 100, 101, 102 vorgenommen werden, bevorzugt vom dem Gerät hoher Datenrate 100, welches die Signalquelle 110 enthält. Ebenso ist es möglich, daß ein zusätzliches Gerät im System 1 vorhanden ist, welches die zeitliche Sendesteuerung aller Geräte vornimmt, d. h. entsprechende Zeitschlitze zum Senden zuweist.

Falls es nötig ist, die Datenrate des Geräts niedriger Datenrate zu erhöhen, kann mehr als eine Trägerfrequenz verwendet werden. Dabei wird, wie oben erläutert, die maximale Übertragungsrate der Geräte hoher Datenrate weiter verringert, falls dafür nicht zusätzliche Trägerfrequenzen, wie in Figur 2b dargestellt, vorgesehen werden.

Es ist offensichtlich, daß abweichend von der obigen Beschreibung andere Konfigurationen von Geräten hoher und niedriger Datenrate möglich sind, insbesondere können die Geräte hoher und niedriger Datenrate andere Funktionen als die oben beschriebenen aufweisen. Abweichend vom beschriebenen Ausführungsbeispiel für Geräte der Unterhaltungselektronik kann die vorliegende Erfindung auch in anderen Fällen eingesetzt werden, bei denen nachrichtentechnische Geräte hoher und niedriger Datenrate in einem System kombiniert werden sollen.

## Patentansprüche

1. Verfahren für den Betrieb von nachrichtentechnischen Geräten niedriger Datenrate in drahtlose Breitbandnetzen, welche von Geräten hoher Datenrate gebildet werden, wobei die Geräte hoher Datenrate eine Vielzahl von Trägerfrequenzen für die Übertragung der Daten verwenden,
**dadurch gekennzeichnet,**da**ß**
die Geräte niedriger Datenrate eine einzige Trägerfrequenz für die Übertragung der Daten niedriger Datenrate verwenden,
die Geräte niedriger Datenrate nur Signale dieser einen Trägerfrequenz empfangen, und
die Geräte hoher Datenrate Daten mit niedriger Datenrate und mit hoher Datenrate senden und empfangen.

2. Verfahren nach Anspruch 1,
**dadurch gekennzeichnet, daß**
die Trägerfrequenz für die Übertragung der Daten niedriger Datenrate eine Trägerfrequenz der Vielzahl von Trägerfrequenzen ist.

3. Verfahren nach Anspruch 1,
**dadurch gekennzeichnet, daß**
die Trägerfrequenz für die Übertragung der Daten niedriger Datenrate eine zusätzliche Trägerfrequenz ist, welche benachbart zu einer Trägerfrequenz der Vielzahl von Trägerfrequenzen mit einem Frequenzabstand angeordnet ist, welcher dem Frequenzabstand der einzelnen Trägerfrequenzen der Vielzahl von Trägerfrequenzen zueinander entspricht.

4. Verfahren nach einem der Ansprüche 1 bis 3,
**dadurch gekennzeichnet, daß**
mehr als eine Trägerfrequenz für die Übertragung von Daten niedriger Datenrate verwendet werden.

5. System (1) bestehend aus mindestens einem nachrichtentechnischen Gerät hoher Datenrate (100, 101, 102), welche ein drahtloses Breitbandnetz bilden und Daten mittels einer Vielzahl von Trägerfrequenzen (f₀ bis fₙ₋₁) übertragen und empfangen, und mindestens einem Gerät niedriger Datenrate (200),
**dadurch gekennzeichnet,daß**
das oder die Geräte niedriger Datenrate (200) einen Modulator (230) aufweisen, welcher die Daten niedriger Datenrate einer einzigen Trägerfrequenz (fₙ oder fₙ₋₁) aufmoduliert,
das oder die Geräte niedriger Datenrate (200) einen Demodulator (235) aufweisen, welcher empfangene Signale mittels der einzigen Trägerfrequenz (fₙ oder fₙ₋₁) demoduliert, und
das oder die Geräte hoher Datenrate eine Hochfrequenzeinrichtung (130, 131, 132) und eine Signalverarbeitungseinrichtung (120, 121, 122) aufweisen, welche Daten mit niedriger Datenrate und mit hoher Datenrate senden und empfangen.

6. System nach Anspruch 5,
**dadurch gekennzeichnet, daß**
die in Modulator (230) und Demodulator (235) verwendete Trägerfrequenz eine Trägerfrequenz (fₙ₋₁) der Vielzahl von Trägerfrequenzen (f₀ bis fₙ₋₁) ist.

7. System nach Anspruch 1 oder 2,
**dadurch gekennzeichnet, daß**
die in Modulator (230) und Demodulator (235) verwendete Trägerfrequenz eine zusätzliche Trägerfrequenz (fₙ) ist, welche benachbart zu einer Trägerfrequenz der Vielzahl von Trägerfrequenzen (f₀ bis fₙ₋₁) mit einem Frequenzabstand angeordnet ist, welcher dem Frequenzabstand der einzelnen Trägerfrequenzen der Vielzahl von Trägerfrequenzen (f₀ bis fₙ₋₁) zueinander entspricht.

8. System nach einem der Ansprüche 5 bis 7,
**dadurch gekennzeichnet, daß**
mehr als ein Modulator (230) und Demodulator (235) für die Übertragung von Daten niedriger Datenrate verwendet werden.

9. System nach einem der Ansprüche 5 bis 8,
**dadurch gekennzeichnet, daß**
ein Bandpaß (238) nach jedem Demodulator (235) angeordnet ist.

10. Nachrichtentechnisches Gerät für die Übertragung von Daten niedriger Datenrate,
**gekennzeichnet durch**
die Merkmale eines der Ansprüche 5 bis 9.

11. Nachrichtentechnisches Gerät für die Übertragung von Daten hoher Datenrate,
**gekennzeichnet durch**
die Merkmale eines der Ansprüche 5 bis 9.

12. Nachrichtentechnisches Gerät nach Anspruch 10 oder 11,
**dadurch gekennzeichnet, daß**
das nachrichtentechnische Gerät ein Gerät der Unterhaltungselektronik ist.
